# EUROPEAN PATENT APPLICATION

(11) **EP 4 242 040 A1**
(43) Date of publication of application: **13.09.2023**
(21) Application number: 23160825.8
(22) Date of filing: 08.03.2023
(51) Int. Cl.: B60L 50/50, B60L 50/71, B60L 50/72, B60L 50/75, B60L 58/40

(54) **METHOD AND SYSTEM FOR HANDLING BRAKING EVENTS IN FUEL CELL VEHICLES**

(30) Priority: 11.03.2022 EP 22161677
(71) Applicant: VOLVO TRUCK CORPORATION, 405 08 Göteborg (SE)
(72) Inventor: Arya, Pranav, 437 42 Lindome (SE); Neilson, Rohan, 721 31 Västerås (SE)
(74) Representative: Valea AB

(57) **Abstract**

System and method for dissipating power during a braking event in a vehicle are provided. The vehicle comprises a power assembly comprising a fuel cell system, an air compressor, a first flow control valve configured to selectively direct a compressed air flow from the air compressor to one or both the fuel cell system and a second path; and a second flow control valve positioned in the second path and configured to selectively direct the air flow to one or both a brake resistor and an air storage device. A control unit is configured to estimate a braking power of the braking event, and, when an energy storage system cannot fully absorb the braking power, operate the first and second flow control valves to selectively direct the compressed air flow from the air compressor to one or more of the fuel cell stack, the air storage device, and the brake resistor.

## Description

### TECHNICAL FIELD

The disclosure relates to system and method for handling braking power in a fuel cell vehicle.

The disclosure can be applied in heavy-duty vehicles, such as trucks, buses, and construction equipment. Although the disclosure may be described with respect to a particular vehicle, the disclosure is not restricted to any particular vehicle.

### BACKGROUND

In a fuel cell vehicle, a fuel cell system and an energy storage system (ESS) are used in combination for powering the vehicle. The fuel cell system comprises one or more, and typically hundreds of fuel cells forming a fuel cell stack for generating the desired propulsion power supplied to the vehicle. A fuel cell is an electrochemical cell which converts the chemical energy of a fuel, typically hydrogen, and an oxidizing agent, typically oxygen or air, into electricity. Fuel cells are considered a promising, more environmentally friendly alternative, compared to conventional internal combustion engines. Thus, fuel cells are increasingly considered for powering electric vehicles, such as pure electric vehicles and hybrid electric vehicles.

One of important features of electric vehicles relates to their capability to capture kinetic energy from braking and convert it electrically to be stored in an ESS, such as e.g. a battery system, and used for providing propulsive power or for the basic energy needs of supplementary electrical systems.

In fuel cell electric vehicles (FCEVs), handling braking events/endurance braking may be challenging, as compared to a vehicle propelled solely by an internal combustion engine (ICE) in which auxiliary braking is provided by a retarder or by so-called engine braking. Also, as compared to battery electric vehicles (BEVs), a FCEV does not have large batteries. Thus, in a FCEV, there is a need for a brake resistor or a retarder. However, this comes with a problem that the brake resistor or retarder needs to be cooled which can be a challenge for a FCEV, at least due to fuel cells having significant demands for cooling. Another challenge with braking in FCEVs is that a fuel cell system, which may shut down at a braking event, may however degrade at a shutdown, and frequent shutdowns are damaging and create fuel cell durability issues.

Accordingly, there exists a need for improved methods and systems for handling braking events in fuel cell electric vehicles.

### SUMMARY

Accordingly, a system and method are provided that allow handling braking power generated due to regenerative braking in a fuel cell vehicle. The techniques presented herein address the current drawbacks associated with handling braking events in FCEVs.

According to an aspect of the disclosure, a method of dissipating power during a braking event in a vehicle is provided. The vehicle comprises a power assembly comprising a fuel cell system, an air compressor, a first flow control valve positioned downstream of the air compressor and configured to selectively direct a compressed air flow, via a first path, from the air compressor to one or both the fuel cell system and a second path that is separate from the first path, and a second flow control valve positioned in the second path and configured to selectively direct the air flow to one or both brake resistor and an air storage device. The method comprises:
estimating a braking power of the braking event; and
responsive to a determination that a battery power storage capacity of a battery of the vehicle is not sufficient to fully absorb the braking power of the braking event, operating the first flow control valve and the second flow control valve to selectively direct a compressed air flow from the air compressor to one or more of the fuel cell stack, the air storage device, and the brake resistor based on whether or not a maximum power consumption capability of the air compressor is sufficient to absorb a first remaining braking power that is not absorbed by the battery, and/or based on whether or not the air compressor is capable of supplying an air flow required to reduce a temperature of the brake resistor below a temperature threshold when the first remaining braking power is greater than the maximum power consumption capability of the air compressor.

As used herein, in some examples, the braking power of the braking event may include a power from the fuel cell system, as the fuel cell system may be running during the braking event, even though the power from the fuel cell system may be a minimum power. Thus, when referring to the estimation of the braking power of the braking event it may be assumed that the braking power may include a power from the fuel cell system. In some examples, at the vehicle braking event, even though the fuel cell system is operating, the power from the fuel cell system may be zero or close to zero.

Technical benefits may include increasing the general efficiency of the vehicle. The method and system herein advantageously allow efficient dissipation of the excess electric energy created due to regenerative braking. The braking capability of a fuel cell electric vehicle is increased. The energy is recuperated more effectively, without a need for an oversized battery/energy storage system in the vehicle. Moreover, unnecessary fuel cell system shutdowns are reduced or eliminated, thereby improving a durability and lifetime of one or more the fuel cell systems of the vehicle.

In some examples, the method comprises comparing the first remaining braking power and the maximum power consumption capability of the air compressor.

In some examples, the method comprises, responsive to a determination that the first remaining braking power is smaller than the maximum power consumption capability of the air compressor, operating the first flow control valve to direct a required compressed air flow to the fuel cell system and to the second path, and operating the second flow control valve to direct an additional compressed air flow to the air storage device without directing the compressed air to the brake resistor.

Technical benefits may include recuperating the braking power or energy more efficiently, since the compressed air stored in the air storage device may further be used, e.g. in high altitudes and/or when additional power is required from the fuel cell system.

In some examples, the method comprises, responsive to a determination that the first remaining braking power is greater than the maximum power consumption capability of the air compressor, estimating a second remaining braking power that is a portion of the first remaining braking power to be dissipated through the brake resistor; and determining an air flow required to reduce the temperature of the brake resistor below the temperature threshold when the brake resistor dissipates the second remaining braking power.

Technical benefits may include more efficiently dissipating the braking power.

In some examples, the method comprises determining whether the air compressor is capable of supplying the air flow required to reduce the temperature of the brake resistor below the temperature threshold and supplying an air flow to the fuel cell system required to operate the fuel cell system at the minimum power.

Technical benefits may include advantageously prioritizing the needs for cooling the brake resistor that is used to dissipate the braking power, while also assessing whether it is possible to allocate a certain amount of air required to maintain the fuel cell system operational at the minimum power. If this is the case, the fuel cell system is kept on and operational, whereby its shutdown is avoided.

In some examples, the method comprises, responsive to a determination that the air compressor is capable of supplying the air flow required to reduce the temperature of the brake resistor below the temperature threshold and supplying the air flow to the fuel cell system required to operate the fuel cell system at the minimum power,
operating the first flow control valve to direct the compressed air flow to the fuel cell system and to the second path, wherein the fuel cell system is supplied with the air flow required to operate the fuel cell system at the minimum power, and
operating the second flow control valve to direct the air flow to the brake resistor and to the air storage device, wherein the brake resistor is supplied with the air flow required to reduce the temperature of the brake resistor below the temperature threshold.

Technical benefits may include, as mentioned above, avoiding a shutdown of the fuel cell system, which typically causes some level of damage to the fuel cell system. Furthermore, the efficiency of the distribution of the compressed air is increased.

In some examples, the method comprises, responsive to a determination that the air compressor is not capable of supplying the air flow required to reduce the temperature of the brake resistor below the temperature threshold and supplying the air flow to the fuel cell system required to operate the fuel cell system at the minimum power, shutting down the fuel cell system, and operating the first flow control valve to direct the compressed air flow only to the second path.

In some examples, the method comprises determining whether the air flow required to reduce the temperature of the brake resistor below the temperature threshold is greater than a maximum air flow that the air compressor can generate.

In some examples, the method comprises, responsive to a determination that the air flow required to reduce the temperature of the brake resistor below the temperature threshold is greater than the maximum air flow that the air compressor can generate, operating the second flow control valve to direct an entirety of the compressed air to the brake resistor.

In some examples, the method comprises using an additional cooling source to reduce the temperature of the brake resistor below the temperature threshold. In some examples, the additional cooling source comprises one or both a system delivering a cooling medium to the brake resistor and mechanical brakes.

In some examples, the method comprises responsive to a determination that the air flow required to reduce the temperature of the brake resistor below the temperature threshold is smaller than the maximum air flow that the air compressor can generate, with the first flow control valve being operated to direct the compressed air flow only to the second path, operating the second flow control valve to direct the compressed air to the brake resistor and to the air storage device, wherein the brake resistor is supplied with the air flow required to reduce the temperature of the brake resistor below the temperature threshold.

According to an aspect of the disclosure, a control unit for controlling a power assembly of a vehicle is provided. The power assembly comprises a fuel cell system, an air compressor, a first flow control valve, and a second flow control valve. The control unit is configured to perform the method according to any example of the aspects of the present disclosure.

According to an aspect of the disclosure, a power assembly for a vehicle is provided. The power assembly comprises a fuel cell system, an air compressor, an air storage device, and a brake resistor. The power assembly further comprises a first flow control valve positioned downstream of the air compressor and configured to selectively direct a compressed air flow, via a first path, from the air compressor to one or both the fuel cell system and a second path that is separate from the first path; a second flow control valve positioned in the second path and configured to selectively direct the air flow to one or both the brake resistor and the air storage device; and a control unit configured to control operation of the first and second flow control valves, wherein the control unit controls the first and second flow control valves to dissipate braking power generated during a braking event in the vehicle. The control unit is configured to perform the method according to any example of the aspects of the present disclosure.

According to an aspect of the disclosure, a vehicle comprising a power assembly is provided. The power assembly comprises a fuel cell system, an air compressor, an air storage device, and a brake resistor. The vehicle comprises a first flow control valve positioned downstream of the air compressor and configured to selectively direct a compressed air flow, via a first path, from the air compressor to one or both the fuel cell system and a second path that is separate from the first path; a second flow control valve positioned in the second path and configured to selectively direct the air flow to one or both the brake resistor and the air storage device; and a control unit configured to control operation of the first and second flow control valves, wherein the control unit controls the first and second flow control valves to dissipate braking power generated during a braking event in the vehicle. The control unit is configured to perform the method according to any example of the aspects of the present disclosure.

According to an aspect of the disclosure, a computer program product is provided that comprises computer-executable instructions, which, when executed by processing circuitry, cause the processing circuitry to perform the method according any one or more examples in accordance with aspects of the present disclosure.

According to an aspect of the disclosure, a computer-readable storage medium is provided, the computer-readable storage medium having stored thereon a computer program product comprising computer-executable instructions which, when executed by processing circuitry, cause the processing circuitry to perform the method according to any one or more examples in accordance with aspects of the present disclosure.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control systems, units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a block diagram illustrating a side view of an example of a vehicle, in accordance with examples of the present disclosure.
**FIG. 2** is a block diagram illustrating an example of a power assembly of the vehicle of FIG. 1, in accordance with examples of the present disclosure.
**FIG. 3** is a flowchart illustrating an example of a method of dissipating power during a braking event in a vehicle, in accordance with examples of the present disclosure.
**FIGs. 4A** and **4B** are further flowcharts illustrating an example of a method of dissipating power during the braking event in the vehicle, in accordance with examples of the present disclosure.
**FIGs. 5A** and **5B** are block diagrams illustrating an example of a control unit, in accordance with aspects of the present disclosure.

### DETAILED DESCRIPTION

Aspects set forth below represent the necessary information to enable those skilled in the art to practice the disclosure.

Handling braking events such as, for example, long braking events, e.g. endurance braking, in fuel cell electric vehicles (FCEVs) is currently challenging as there is no engine braking as in conventional vehicles or large batteries as e.g. in battery electric vehicles.

By way of example, a heavy-duty electric vehicle may often be subjected to braking/retardation for long periods, e.g. while driving downhill along a route. In electric vehicles, this braking/retardation may generally be carried out by braking using an electric machine or motor, as part of regenerate braking, which generates power and subsequently charges an electric storage system e.g. batteries of the vehicle. If the braking/retardation periods are long-lasting and extensive, the batteries will eventually become fully charged and can no longer absorb braking power. In such cases, a brake resistor can be used to handle the excessive heat generated once the batteries are fully charged. The brake resistor is heated up using the power produced from the electric machines. For thermal management reasons, the brake resistor needs to be cooled during operation of the vehicle.

In FCEVs, a fuel cell system may be shut down during the braking event, since the power may already be created in excess and there is no need to generate power by the fuel cell system. But fuel cell systems are subject to some degradation at a shutdown, and shutting down a fuel cell system frequently, e.g. at braking events, is thus highly undesirable since this causes fuel cell system degradation and thus decreases reliability of the fuel cell system. This creates an additional challenge for handling a braking event.

Accordingly, a system and method are provided herein that involve a use of an air compressor of the fuel cell system to absorb power during a braking event of the vehicle. A compressed air can selectively be directed to a brake resistor or an air storage device. The air stored in the air storage device may be used to provide air at high altitudes or when additional power is required. In this way, the system and method provide an efficient approach of handling power during a braking event of a vehicle.

Accordingly, in aspects of the present disclosure, a method of dissipating power during a braking event in a vehicle is provided. The vehicle comprises a power assembly comprising a fuel cell system, an air compressor, a first flow control valve positioned downstream of the air compressor and configured to selectively direct a compressed air flow, via a first path, from the air compressor to one or both the fuel cell system and a second path that is separate from the first path, and a second flow control valve positioned in the second path and configured to selectively direct the air flow to one or both brake resistor and an air storage device. The method comprises estimating a braking power of the braking event; and, responsive to a determination that a battery power storage capacity of a battery of the vehicle is not sufficient to fully absorb the braking power of the braking event, operating the first flow control valve and the second flow control valve to selectively direct a compressed air flow from the air compressor to one or more of the fuel cell stack, the air storage device, and the brake resistor based on whether or not a maximum power consumption capability of the air compressor is sufficient to absorb a first remaining braking power that is not absorbed by the battery, and/or based on whether or not the air compressor is capable of supplying an air flow required to reduce a temperature of the brake resistor below a temperature threshold when the first remaining braking power is greater than the maximum power consumption capability of the air compressor.

In examples herein, a system for the vehicle, which is referred to as a power assembly herein, is provided according to an aspect of the present disclosure comprises. The power assembly comprises the controllable first and second flow control valves that are arranged and configured to regulate routing of compressed air from the air compressor to a fuel cell stack and/or to one or both a brake resistor and an air storage device. The first and second flow control valves can allow the system to control a proportion of the compressed air conveyed to one or more out of the fuel cell(s), the brake resistor, and the storage device. In some examples, the controllable first and second flow control valves are collectively operable responsive to a braking event such as responsive to braking power generated at the braking event of the vehicle. The first and second flow control valves are arranged and configured to be controlled in a coordinated manner by a control unit, including, but not limited to, simultaneous control of the valves, variable control of the valves, sequential control of the valves as well as selective control of the valves on the basis of the braking power.

According to another aspect of the present disclosure, a control unit is provided that is configured to perform the method in accordance with aspects of the present disclosure. The control unit may be part of the power assembly of the vehicle. In some cases, the control unit may be positioned such that it is considered to be a separate component that communicates with the power assembly. Regardless of its specific configuration, the control unit is adapted and configured to control components of the power assembly, particularly the first and second flow control valves.

The described system and method provide a dynamic, efficient, and versatile way of managing dissipation of energy generated during braking of the vehicle, in response to an amount of a regenerative braking power. It thus becomes possible to control the air compressor in a fuel cell system so as to provide an improved and versatile power absorption during a braking event.

Furthermore, the power assembly comprising the first and second flow control valves contributes to a dynamic control of distributing compressed air from the air compressor to the brake resistor or the air storage tank so as to better manage excessive energy.

As a further advantage, the system and method herein allow, when possible, keeping the fuel cell system on and operational. This allows reducing a number of fuel cell system shutdowns, thereby increasing reliability and durability of the fuel cell system, and prolonging a lifetime of the fuel cell system.

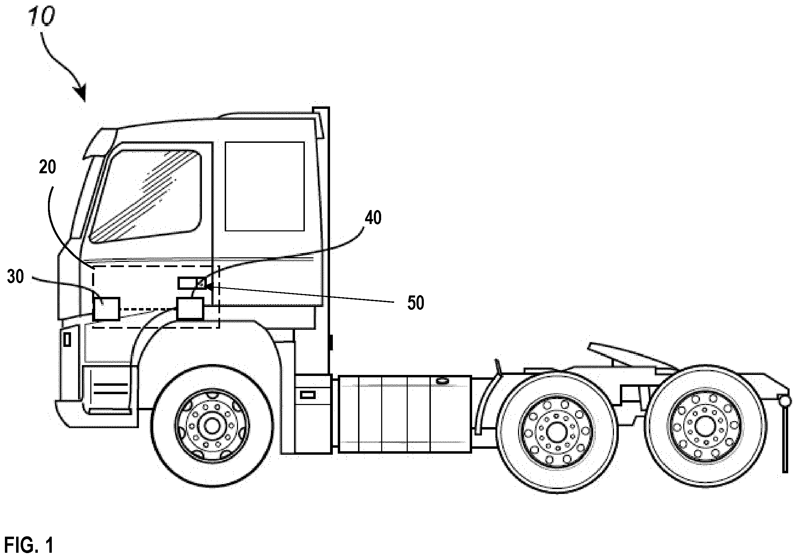

**FIG. 1** illustrates a side view of an example of a vehicle 10 comprising a system or power assembly 20 in accordance with aspects of the present disclosure. The vehicle 10 is shown as a truck, such as a heavy-duty truck. It should however be appreciated that the present disclosure is not limited to this, or any other specific type of vehicle, and may be used in any other type of vehicle, such as a bus, construction equipment, e.g. a wheel loader and an excavator, a passenger car. The vehicle may in some examples also be a marine vessel. In some examples, the vehicle may be an aircraft.

The vehicle 10 may be an autonomous vehicle, i.e. a self-driving vehicle, and/or the vehicle 10 may be arranged to be operated by a driver. The driver may be an on-board driver and/or an off-board driver which controls the vehicle from a remote location.

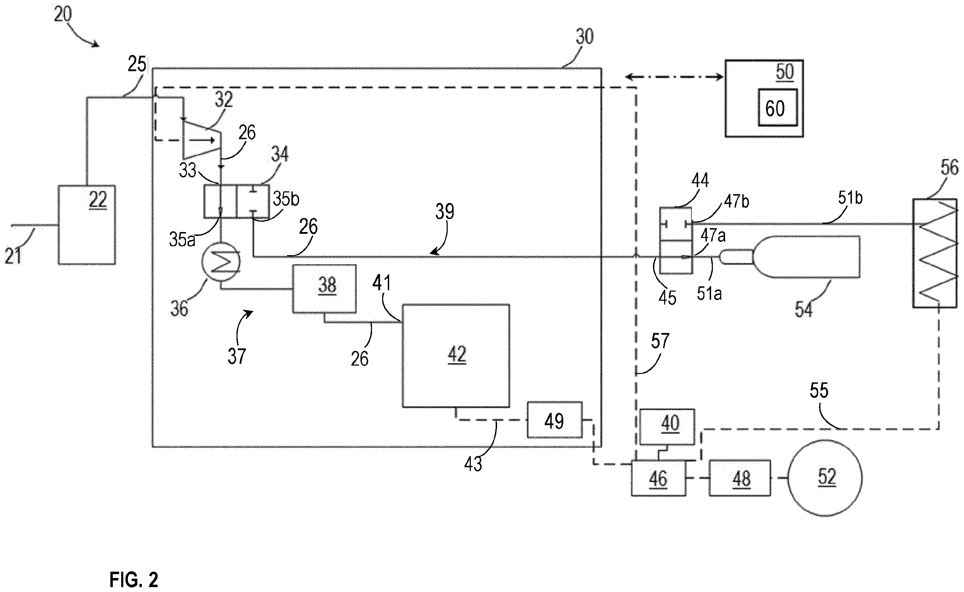

As shown in FIG. 1, the vehicle's power assembly 20 comprises a fuel cell system 30 and an energy storage system (ESS) 40 also referred to as a battery system herein. The vehicle 10 comprises a control device or control unit 50 which is shown herein as part of the power assembly 20, though in some implementations the control unit 50 is located outside of the power assembly 20. The vehicle 10 comprises various other components some of which are further shown in FIG. 2.

The fuel cell system 30 may comprise a plurality of fuel cell systems, e.g., two or more fuel cell systems, such that the vehicle 10 may have multiple fuel cell system, e.g., two or more fuel cell systems. In some examples, the fuel cell system 30 may comprise more than two fuel cell systems, such as three, four, five, or more than five fuel cell systems. Each fuel cell system comprises one or more, typically multiple, fuel cells which together form a fuel cell stack. A fuel cell system may include one or more fuel cell stacks. A fuel cell system may comprise a cooling system (not shown) for cooling at least one fuel cell stack of the respective fuel cell system.

The fuel cell system 30 comprises a fuel cell stack comprising an anode or anode side, a cathode or cathode side, and a membrane such as e.g. PEM separating the anode and cathode. The anode of the fuel cell system 30 receives fuel such as hydrogen and the cathode receives an oxidant such as oxygen or air - typically an air acquired from the outside environment. As a result of the electrochemical reaction that occurs in a fuel cell stack of fuel cell system 30, electrical energy is produced that is supplied to a load such as e.g. one or more electric motors. A by-product of operation of the fuel cell stack is water and heat. The structure of the fuel cell system 30 is not shown in detail herein, and examples herein are not limited to any specific implementation of the fuel cell system 30.

The fuel cell system 30 and the ESS 40 are used for powering one or more electric motors which are used for creating a propulsion force to the vehicle 10. The fuel cell system 30 and the ESS 40 may additionally be used for powering other electric power consumers (not shown) of the vehicle 10, such as an electric motor for a crane, an electric motor for a concrete mixer, an electric motor for a refrigerator system, an electric motor for an air conditioning system, or any other electric power consuming function of the vehicle 10. The ESS 40 such as one or more batteries and/or one or more supercapacitors may be used to store electrical energy, including the energy produced by the fuel cell system 30. In various examples, the ESS 40 may provide electrical energy storage during regenerative braking, provide electrical energy storage device for electrical energy that is generated from the fuel cell system at low loads, assists the fuel cell system 30 with generating power at higher loads, or may serve as a main energy supplier when one or more fuel cell systems operate at low loads. It should be appreciated that the vehicle may be powered using electrical energy from any combination of the fuel cell system 30 and the ESS 40.

**FIG. 2** illustrates an example of a system or power assembly 20 (also shown in FIG. 1) of the vehicle 10 in which some aspects of the present disclosure may be implemented. Control unit 50, which may be part of the power assembly 20 or a separate component, is also shown in FIG. 2. The control unit 50 has processing circuitry 60. In FIG. 2, paths that air can travel are shown by solid lines, and electrical connections are shown by dashed lines. Boundaries of a fuel cell system 30 are shown schematically by a solid line, for illustration purposes only and not to show actual boundaries. In addition, a communication connection with a control unit 50 is shown by a dot-dashed line.

It should be noted that the power assembly 20 shown in FIGs. 1 and 2 is referred to as a power assembly for illustration purposes only, to indicate that components of the assembly 20 operate to power the vehicle 10 and its auxiliary power devices. The power assembly 20 can alternatively and interchangeably be referred to as a system 20 for the vehicle 20, as the power assembly 20 does not necessarily include only components that directly contribute to power generation and handling by the vehicle 10.

As shown in FIG. 2, the power assembly 20 comprises a fuel cell system 30, an ESS 40, a high voltage junction box or unit 46, an electrical machine or electric motor 48, wheels 52, an air storage device 54, and a brake resistor 56.

The fuel cell system 30 comprises an air compressor 32 in a balance-of-plant (BoP) of the fuel cell system 30, a fuel cell stack 42, an air cooler 36, a humidifier 38, and a DC/DC converter 49. The power assembly 20 and the fuel cell system 30 may comprise various other components not shown herein for brevity purposes. Thus, the fuel cell system 30 comprises an exhaust outlet through which by-products of operation of the fuel cell system may be carried away e.g. to the outside environment or atmosphere or, in some cases, for reuse in the fuel cell system 30. The exhaust outlet can comprise one or more of a cathode outlet, an anode outlet, or an outlet carrying exhaust water and heat from both the anode and cathode sides of the fuel cell stack 42. The fuel cell system 30 also includes a hydrogen delivery subsystem for supplying hydrogen to the anode of the fuel cell stack 42. As another example, the fuel cell system 30 comprises a thermal management subsystem for controlling a temperature of the fuel cell stack 42 and media circulating therein, comprising e.g. a cooling subsystem. The power assembly 20 may also comprise a cooling system for supplying a cooling medium or otherwise cooling the brake resistor 56.

As shown in FIG. 2, the air acquired from the atmosphere, such as an air from an ambient environment shown by a line 21, may be filtered in an air filter 22 and provided, as shown by a line 25, to an air compressor 32 which pressurizes the air and thereby outputs a compressed air flow 26. The air compressor 32 is operated to increase the pressure level of the intake air to levels suitable for the fuel cell. By increasing the pressure level of the intake air, also the temperature level of the intake air is increased, and the air may further be cooled before being supplied to a cathode side of the fuel cell stack. The air compressor 32 is an electrically driven compressor, and it is configured to operate in any type of driving situation, including when the vehicle is not braking. Typically, the air from an air compressor is supplied to the fuel cell stack and the air compressor is operated in a way to provide a desired mass flow at different set points for power, with compressor power consumption being proportional to the mass flow. In some cases, as an example, the air compressor may consume from 20% to 30%, e.g., 20% or 21% or 22% or 23% or 24% or 25% or 26% or 27% or 28% or 29% or 30%, of the power delivered by the fuel cell system at full load. Other ranges are also possible.

In examples in accordance with aspects of the present disclosure, the air compressor 32 is configured to supply the compressed air flow via a first path, labeled in FIG. 2 as 37, to a fuel cell stack 42 of the fuel cell system 30 and/or via a secondary or second path, labeled as 39, to one or both an air storage device 54 and a brake resistor 56. The compressed air is selectively directed from the air compressor 32 to one or more of the fuel cell stack 42, the air storage device 54, and the brake resistor 56, by operating a first flow control valve 34 and a second flow control valve 44.

The first flow control valve 34 is positioned downstream of the air compressor 32 and configured to be controlled to selectively direct the compressed air flow from the air compressor 32 to the fuel cell stack 42 and/or the second path 39. In some examples, the first flow control valve 34 may be positioned immediately downstream of the air compressor 32. In some examples, there may be one or more components between the air compressor 32 and the first flow control valve 34 positioned downstream of the air compressor 32. The secondary or second path is a separate conduit connectable to the air storage device 54 and to the brake resistor 56.

The second flow control valve 44 is positioned in the second path 39 upstream of the air storage device 54 and configured to be controlled to selectively direct the compressed air flow via the second path 39 to the air storage device 54 and/or the brake resistor 56.

As shown in FIG. 2, the first flow control valve 34 comprises an inlet port 33 fluidly connected to the air compressor 32 that supplies the compressed air, a first outlet port 35a fluidly connected to a downstream conduit such as the first path 37 connectable to the fuel cell stack 42, and a second outlet port 35b fluidly connected to a second downstream conduit such as the second path 39. As also shown in FIG. 2, the second flow control valve 44 comprises an inlet port 45 fluidly connected to the second path 39, a first outlet port 47a fluidly connected to a first downstream conduit 51a connectable to the air storage device 54 and a second outlet port 47b fluidly connected to a second downstream conduit 51b conduit connectable to the brake resistor 56.

As used herein, "fluidly connected" indicates that one or more components are connected by suitable one or more elements or components that allows fluids, including gases such as the air, to pass between the components without leaking or losing volume. Non-limiting examples of fluid connections include various conduits, tubes, channels, and connections known in the art. Fluidly connected components may also include additional elements or components between each of the fluidly connected components while still maintaining a fluid connection. That is, in some cases, the fluidly connected components may include other elements or components, such that fluid passing between the fluidly connected components may also pass through the other elements or components.

The control unit 50 is adapted and configured to control the first flow control valve 34 and the second flow control valve 44 in accordance with examples of the present disclosure, as discussed in more detail below. The first and second flow control valves 34, 44 are selectively controllable to direct the compressed air depending on one or more of various static and/or dynamic parameters. Thus, the valves 34, 44 can be controlled in dependence on detecting or predicting a braking event of a vehicle e.g. when the vehicle slows down, in dependence on the braking power created during the braking event, a state of charge (SoC) of the ESS such as one or more batteries, a state of health (SoH) of the batteries, and power storage capabilities or power storage capacity of the batteries. The control unit 50 may monitor parameters such as e.g. the braking power, the batteries SoH and SoC, as well as the battery power storage capacity, and the control unit 50 is configured to control operation of the first and second flow control valves 34, 44 based on these parameters. Non-limiting examples of other parameters used to control operation of the first and second flow control valves 34, 44 include one or more of a maximum amount of power that can be consumed by the air compressor 32, a maximum air flow that can be generated by the air compressor 32, an air flow required to cool the brake resistor, and an air flow required to operate the fuel cell system at a minimum power. It should be noted that some fuel cell systems do not have a minimum power limitation and can fully divert air without being shut down i.e. without going through what is known as a typical shutdown process for a fuel cell system.

The first and second flow control valves 34, 44 may be e.g. proportional pneumatic valves. The control unit 50 is configured to control or operate the first flow control valve 34 to operate in a first position, also referred to herein as an intermediate position, in which the first flow control valve 34 directs a compressed air flow to the fuel cell system 30, i.e. to the fuel cell stack 42 for supplying the air to the cathode, and to the second path 39. The first flow control valve 34 can also be controlled by the control unit 50 to be moved to a second position, also referred to herein as an extreme position, in which the first flow control valve 34 directs a compressed air flow only to the second path 39 and does not direct the compressed air flow to the fuel cell stack 42.

It should be noted that the control unit 50 is also configured to operate the first flow control valve 34 in a position in which the first flow control valve 34 supplies a compressed air flow only to the fuel cell stack 42, e.g. in response to one or more of an operational state of the fuel cell system, an operating mode of the vehicle 10 and a power demand from the vehicle 10 that includes a load on the fuel cell system. The operational state of the fuel cell system may be indicative of a load on the first fuel cell system, such as the power or energy required of the fuel cell system to power the load. Because this scenario is not discussed in detail in the present disclosure, a control of the first flow control valve 34 so that the compressed air is supplied only to the fuel cell stack 42 is not discussed further herein.

The control unit 50 is configured to control or operate the second flow control valve 44 to operate in a first position, also referred to herein as an intermediate position, in which the second flow control valve 44 directs the compressed air flow to both the air storage device 54 and the brake resistor 56. The control unit 50 is also configured to control the second flow control valve 44 to operate in a second position, also referred to herein as a first extreme position, in which the second flow control valve 44 directs the compressed air flow only to the air storage device 54. The control unit 50 is further configured to control the second flow control valve 44 to operate in a third position, also referred to herein as a second extreme position, in which the second flow control valve 44 directs the compressed air flow only to the brake resistor 56. The control unit 50 is configured to operate the second flow control valve 44 when the first control valve 34 is in a position, such as the first or intermediate position, in which it provides a compressed air flow to the second path 39.

It should be noted that a certain position of a valve of the first and second flow control valves 34, 44 indicates that the valve is moved or switched to operate in this position regardless of the prior position of the valve.

The first and second flow control valves 34, 44 may be separately controllable. In addition, it should be noted that the term "intermediate position" does not indicate any specific position of the first and second flow control valves 34, 44, and is only used to specify that the first flow control valve 34 directs a compressed air flow to the fuel cell system 30 and the second path 39, and the second flow control valve 44 directs a compressed air flow to both the air storage device 54 and the brake resistor 56. The compressed air flow 26, supplied by the air compressor, can be distributed to one or more out of the fuel cell system 30, the air storage device 54, and the brake resistor 56 in various proportions, by operating the first and second flow control valves 34, 44 in dependence on the braking power of a braking event and other parameters described herein. The first and second flow control valves 34, 44 may be proportional pneumatic valves and they can be configured to regulate any one of a flow rate and pressure of the compressed air being supplied from the air compressor 32. Thus, a degree of opening or closing, or other change in a position of a valve of the first and second valves 34, 44, can allow distributing the compressed air flow supplied from the air compressor 32, in a controlled manner, as described in examples herein.

In some examples, each one of the first and second flow control valves 34, 44 is a three-way flow control valve device. A three-way flow control valve device comprises an inlet port fluidly connected to an upstream source of compressed air, a first outlet port fluidly connected to a first downstream conduit and a second outlet port fluidly connected to a second downstream conduit. Thus, the first flow control valve 34 comprises the inlet port 33 fluidly connected to the air compressor 32 compressed air and the first and second outlet ports 35a, 35b. Similarly, the second flow control valve 44 comprises the inlet port 45 fluidly connected to the second path 39 and the first and second outlet ports 47a, 47b. In some examples, the controllable flow control valve may be a controllable diverting three-way flow control valve.

As show in FIG. 2, the first flow control valve 34 is positioned downstream, e.g. immediately downstream in this example, of the air compressor 32 and configured to be controlled to selectively direct the compressed air flow from the air compressor 32 to the fuel cell stack 42 and/or to the second path 39. As used herein, unless indicated otherwise, a downstream location or position denotes a position away from the air compressor 32 and towards an inlet 41 of the fuel cell stack 42. In the illustrated example, the inlet 41 is a cathode inlet through which the air is supplied to the cathode (not shown) of the fuel cell stack 42. In the fuel cell stack 42, an electrochemical reaction between a fuel such as hydrogen supplied to an anode (not shown) of the fuel cell stack 42 and the air or oxygen supplied to the cathode generates electric power. The hydrogen is supplied to the anode of the fuel cell stack 42 from a hydrogen source not shown herein.

As shown in FIG. 2, in the first path 27, the compressed air flow towards the fuel cell stack 42, which provides oxygen to the stack 42 to react with hydrogen at the anode and thereby produce electric power, may be cooled in the charge air cooler 36 and humidified via the humidifier 38 positioned downstream of the charge air cooler 36.

The electric power, labeled as 43, generated by the fuel cell stack 42 is supplied to the junction box or unit 46, such as a high-voltage junction box, through a DC/DC converter 49 that converts and stabilizes the voltage. The power is supplied, via the junction unit 46, to an electric motor or machine 48, also referred to herein as an electric traction machine, for propelling one or more sets of wheels 52 of the vehicle. The function of the DC/DC converter 49 is to provide or supply power from the fuel cell stack 42 at a right voltage as of the traction/battery system. The junction unit 46 is a component that serves as a communal meeting spot electrical connections between the fuel cell stack 42, the ESS 40, and the electric machine 48. Traction power to the wheels 52 is delivered by the electric machine 48 supplied by one or both the ESS 40, such as e.g. a battery system comprising one or more batteries, and the fuel cell stack 42. Thus, the vehicle 10 comprises the system 20, referred to herein as a power assembly 20, which favorably forms part of an electrical powertrain system for providing propulsion to the vehicle 10.

The electric machine 48 is operated by electric energy or power provided from the fuel cell stack 42 or the ESS 40. The ESS 40 can store excess power produced by the fuel cell system 30 and the ESS 40 is configured to absorb and store a braking power of a braking event of the vehicle. The braking power, also referred to as a regenerative power or regenerative braking power, is generated when kinetic energy from braking a vehicle is captured and converted into electrical power. The regenerative braking power or energy generated upon braking of the vehicle can be stored in the ESS 40 and/or dissipated by a brake resistor 56 that is electrically connected to the electric motor 48 and receives the braking power as the vehicle is controlled to slow down or stop. The regenerative power is communicated to the ESS 40 and to the brake resistor 56 via the junction unit 46, and possibly via other components that are not shown herein.

The brake resistor 56 converts electric energy into thermal energy when power is transmitted to the brake resistor 56. Thus, it is required to cool the brake resistor 56 e.g. by using a cooling medium such as e.g. an air. Thus, the air compressor 32 is configured to supply, via the second path 39, a compressed air flow required to reduce a temperature of the brake resistor 56 below a certain threshold.

The brake resistor 56 is arranged to be cooled by the compressed air. Hence, the brake resistor 56 may generally also be denoted as an air-cooled brake resistor. The brake resistor 56 is arranged downstream the separate fluid conduit denoted herein as the second path 39, in fluid communication with the air compressor 32 via the second path 39. There may also be a charge-air-cooler (not illustrated) disposed in the second path 39 to regulate a temperature of the air downstream the air compressor 32. The brake resistor 56 is an electric powered brake resistor. This means that the air-cooled brake resistor 56 is arranged in electric connection with, and operable by, an electric energy source, such as the electric machine 48. In FIG. 2, the brake resistor 56 is connected to the junction unit 46 by an electrical connection 55, and the brake resistor 56 is thus connected to the electric machine 48 via the junction unit 46.

Thus, the air-cooled electric brake resistor 56 is arranged as an electric power consumer. When the air-cooled electric brake resistor 56 receives electric power from the electric traction machine 48, the pressurized air from the air compressor 32, provided to cool the brake resistor 56, is heated by the brake resistor 56. The pressurized and heated air is thereafter directed towards the ambient environment. The air from the air-cooled electric brake resistor 56 may be directed into a muffler (not shown) of a braking device. The muffler is configured to reduce noise and can also provide a pressure drop of the air.

The air flow from the air compressor 32 may additionally or alternatively be directed to the air storage device 54 such as e.g. an air storage tank. The air storage device 54 is configured to store the compressed air in a releasable manner. In some situations, a portion of the compressed air from the air compressor 32 can be routed to the air storage device 54 such as e.g. an air storage tank, for another operating situation requiring more compressed air. The arrangement of the air storage device 54 downstream of the air compressor 32 may contribute to improve the capabilities of the vehicle to absorb and store some amount of energy and power during the braking event. By way of example, the compressed air routed and stored in the air storage device 54 can be used when the fuel cell system 30 is operated at high altitudes, thereby increasing the likelihood that the fuel cells can provide sufficient power. The air stored in the air storage device 54 may be used when additional power is required from the fuel cell system 30.

In FIG. 2, the air compressor 32 is an electrical compressor powered by a corresponding electric motor (not shown) which receives electric power from one or more electrical energy sources, such as the ESS 40, the electric machine 48, and/or the fuel cell stack 42. As such, the air compressor 32 is in electrical connection with the ESS 40, the electric machine 48 and the fuel cell stack 42 via the junction unit 46, as depicted in FIG. 2. In particular, the air compressor 32 is in electrical connection with the junction unit 46 via an electrical connection 57, as shown in FIG. 2.

In addition, although not explicitly illustrated, the fuel cell system 30 may also comprise an expander. The expander may be a turbine. In an example, the air compressor 32, the expander and - if present as a separate component - an electric motor driving the air compressor 32, may be coupled to each other by a compressor shaft. The purpose of the expander is to support the electric motor of the air compressor 32, such that part of the electrical energy/power required by the compressor 32 is provided by the expander and rest is delivered from the electric motor.

In use, during operation of the vehicle 10, when the electric machine 48 operates as a generator to control the vehicle speed, e.g. the vehicle 10 operates in the regenerative braking mode, electric power is transmitted from the electric machine 48 to the ESS 40. If the ESS 40 is not able to receive all, or parts of the electric power generated by the electric machine 48, for example because of a current electric charging capacity, i.e. the level of electric power of the ESS 40 is able to receive until being fully charged or has reached its maximum allowed state of charge level, the excess electric power should preferably be dissipated. In examples herein case, the ESS 40, such as one or more batteries, is controlled by the control unit 50 to supply electric power to the air compressor 32, or to a separate electric motor of the air compressor. In addition or alternatively, the electric machine 48 operating in its generator mode to generate electrical energy may directly supply electrical energy to the air compressor 32 that is operating to compress air received from an ambient environment. As such, the air compressor 32 is generally configured to pressurize ambient air to a certain level to generate a steady stream of airflow, which may be used for the proper function of the fuel cell stack 42 and for supplying the compressed air for cooling the air-cooled electric brake resistor 56.

For a braking event of the vehicle, a braking power or a brake power trace may be estimated, for example, using information about terrain and topography, vehicle gross combination weight (GCW), vehicle speed, traffic conditions, speed limits, a status of the fuel cell system, etc. Furthermore, using knowledge about a storage capacity of the ESS e.g. a battery power storage capacity of a battery capacity, a battery state of charge and state of health, it may be determined whether or not the batteries can absorb the braking power. If the batteries can absorb the braking power, the batteries can be charged during the braking event, while no other subsystem needs to be used for power dissipation.

However, if the braking power cannot be completely absorbed by the batteries, an additional power dissipation source is required in some examples. Thus, the electric power can be supplied to the air compressor 32 and the excessive energy may be used to pressurize the air by the air compressor 32 by using the electrical energy to power an electric motor (not shown separately) driving the air compressor. The air compressor 32 can be drivingly connected to a corresponding electric motor that is operable from any source of electrical energy, including recuperated energy from braking, electrical energy from the ESS 40, and/or electrical energy from the fuel cell stack 42. The electric motor configured to drive the air compressor 32 can be an integral part of the electrical air compressor 32 or a separate component in electrical connection with the air compressor 32.

Thus, if the braking power, combined with a minimum power from the fuel cell system, is less than a combined batteries capability and maximum compressor power consumption, the air compressor 32 may be operated at an increased power, to reach the required power, and the air flow is provided from the air compressor 32 to the fuel cell stack 42 as well as to the air storage device 54. At this point, the brake resistor is not operating and does not require any cooling. The first flow control valve 34 is in the intermediate position, supplying the air flow to both the fuel cell stack 42 and to the second path 39. At the same time, the second flow control valve 44 is in the second position, also referred to as the first extreme position, supplying the air flow only to the air storage device 54.

However, if the air compressor 32 cannot absorb the remaining braking power, the use of the brake resistor is required. An air flow required for cooling the brake resistor will need to be estimated. Following this estimation, it is required to determine whether the combined air flow required for cooling the brake resistor and for operation of the fuel cell system at a minimum power is greater than an amount of air flow than the air compressor can provide. If this is the case, the air compressor can be operated at a maximum power and the fuel cell system may be shut down. The first flow control valve 34 is moved to a position in which the air flow is supplied only to the second path. Further, it may be determined whether the air flow required to cool the brake resistor is greater than what the air compressor can provide. If this is the case, the second flow control valve 44 is moved to the third or second extreme position in which it allows the compressed air flow to be supplied only to the brake resistor 56. Moreover, another cooling media to cool the brake resistor may be used, and, additionally or alternatively, another form of braking is employed such as e.g. mechanical braking.

If the air flow required to cool the brake resistor 56 is not exceeding the air compressor capabilities, the second flow control valve 44 is moved to an intermediate position, supplying the required air to the brake resistor 56 for cooling and supplying the remaining air to the air storage tank.

Furthermore, if the combined air flow required for cooling of the brake resistor 56 and operation of the fuel cell system 30 at a minimum power is smaller than what the air compressor 32 can provide, the fuel cell system is kept operational while running the air compressor at a maximum power. In this case, the first flow control valve 34 is moved to an intermediate position, supplying the air flow required by the fuel cell system 30 and supplying the remaining air to the second path 39. Also, the second flow control valve 44 is in an intermediate position supplying the required air to the brake resistor 56 and the rest of the air to the air storage device 54.

As noted above, the fuel cell system 30 of a power assembly such as power assembly 20 may comprise more than one fuel cell system. Thus, in some examples, the fuel cell system 30 may be a dual fuel cell system e.g. as described in European Patent Application 22161677.4 to which the present application claims priority. European Patent Application 22161677.4 describes a dual fuel cell system in fluid communication with a brake resistor and an air storage tank. Respective fuel cell systems of the dual fuel cell system may have corresponding air compressors, fuel cell stacks, DC/DC converters, first and second flow control valves and other components as described herein, coupled to a common inlet of a brake resistor such as the brake resistor 56. The brake resistor 56 may be connected to an electric machine such as e.g. electric machine 48, via a junction unit 46. The electric machine 48 may be connected to the ESS 40 such as e.g. a battery system, via the junction unit 46.

In some examples, the power assembly 20, or a similar system comprising components in accordance with aspects of the present disclosure, may include a plurality of fuel cell systems arranged in a parallel configuration with an ESS. In addition, the ESS such as a battery system may include a plurality of battery packs. In addition, or alternatively, the battery system may be an integral part of the fuel cell system.

In addition, in some examples, the power assembly 20 may include or be connected to a bi-directional charging port capable of both receiving electrical energy from and providing electrical energy to an external power supply. Such an external power supply may for example be a charging station connected to the power grid, a battery or another vehicle. The power assembly 20 can be considered to comprise one or more electric traction motors connected to one or more wheels 52 of the vehicle, either directly or via a transmission arrangement (not shown). The vehicle may further comprise a combustion engine (not shown) for vehicle propulsion, and the combustion engine, battery, and fuel cell systems can together be controlled to provide power to the vehicle in an efficient manner.

Although not depicted in FIGs. 1 and 2, the power assembly 20 may comprise one or more temperature sensors, pressure, and other sensors to provide further control data for the control unit 50 and the power assembly 20. The application of such sensors in the power assembly 20 is generally provided and arranged in view of the type and configuration of the fuel cell system and the vehicle, as is commonly known in the art. The fuel cell system may also include temperature sensors in or associated with the fuel cell stack. Hereby, a temperature level of the fuel cell stack can be determined. A temperature sensor may also be positioned in or in the vicinity of the brake resistor to allow for a precise cooling control of the brake resistor. The power assembly 20, such as e.g. the fuel cell system 30 may comprise various other sensors such as e.g. humidity sensors.

The operation of the power assembly 20 is controlled by a control unit or device, such as the control unit 50. The control unit 50 may control operation of the fuel cell system 30, the ESS 40, and a propulsion system i.e. the electric motor 48. The control unit 50 may be an electronic control unit and may comprise processing circuitry 60 such as one or more processors which are configured to execute a computer program code or computer-executable instructions as disclosed herein. The computer-executable instructions, when executed by the processing circuitry 60, perform one or more of the processes or methods described herein. The control unit 50 may comprise hardware, firmware, and/or software for performing methods according to examples of the present disclosure. In certain implementations, the control unit 50 may be denoted a computer. The control unit 50 may be constituted by one or more separate sub-units. The control unit 50 may communicate with the power assembly 20 by use of wired and/or wireless communication technology.

In implementations in which the power assembly 20 comprises multiple fuel cell systems, each fuel cell system may comprise its own control unit or system. In such implementations, the control unit 50 may control operation of multiple control systems.

Furthermore, even though an on-board control unit 50 is shown in FIGs. 1 and 2, it should be understood that the control unit 50 may be a remote control unit, i.e. an off-board control unit, or a combination of an on-board and off-board control unit or units. An off-board control unit may be part of a computer cloud system. The control unit 50 may be configured to control the power assembly 20, and other components of the vehicle, by issuing control signals and by receiving status information relating to the power assembly 20 and/or other components. The control unit 50 may be configured to receive information from various sensors, including one or more of pressure sensors, temperature sensors, moisture sensors, speedometers, gyroscopes, accelerometers, controller area network (CAN) sensors, inertial measurement units (IMUs), and other sensors included in or associated with any one or more of the power assembly 20, the fuel cell system 30, the ESS 40, and/or other components of the vehicle.

The control unit 50 can be configured to acquire, via a wireless communications network, information that represents a depiction of an environment around the vehicle, including in real-time or as close to real-time as possible. In some examples, the control unit 50 may be configured to communicate with various remove servers, e.g., via a wireless communications network. For example, the control unit 50 may communicate with navigation and map services, e.g. Google Maps, etc., to acquire information about real-time and predicted traffic conditions, road conditions, speed limits, etc., such that conditions around the vehicle may be monitored by the control unit 50 in real-time. Also, predicted road and traffic conditions may be used to assess whether the vehicle is expected to brake thereby a braking event occurs.

The control unit 50 may also communicate with one or more remote servers providing weather information, to obtain information about current and predicted weather conditions, such that the control unit 50 may be aware of actual and predicted weather conditions in areas traveled by the vehicle. A navigation and/or map service may additionally or alternatively provide information on weather-related conditions.

Furthermore, although the present disclosure is described with respect to a vehicle such as a truck, aspects of the present disclosure are not limited to this particular vehicle, but may also be used in other vehicles such as passenger cars, off-road vehicles, aircrafts and marine vehicles.

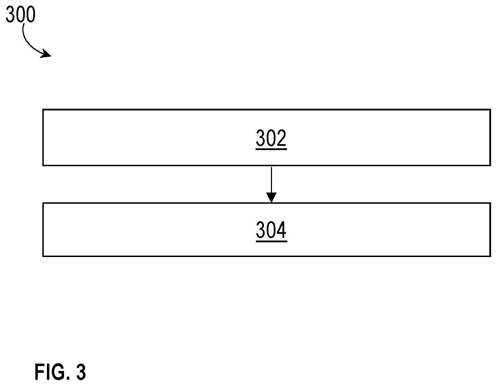

**FIG. 3** illustrates an example of a method or process 300 of dissipating power during a braking event in a vehicle. The vehicle, such as e.g. vehicle 10 of FIG. 1, comprises the power assembly 20 comprising the fuel cell system 30, and the air compressor 32 configured to supply a compressed air flow via a first path 37 to a fuel cell system and via a second path 39 to one or both the air storage device 54 and the brake resistor 56. The power assembly 20 also comprises the first flow control valve 34 positioned downstream of the air compressor 32 and configured to selectively direct a compressed air flow, via the first path, from the air compressor 32 to one or both the fuel cell system 30 and the second path that is separate from the first path, and the second flow control valve 44 positioned in the second path and configured to selectively direct the air flow to one or both the brake resistor 56 and the air storage device 54. The vehicle 10 comprises the ESS 40 such as one or more batteries that are configured to absorb and store the braking power. However, power storage capabilities of the batteries 40 may not be sufficient to absorb the entire braking power, and the techniques described herein allow distributing the braking power in an advantageous manner.

The method or process 300 may be a computer-implemented method performed by a control device or unit such as e.g. control unit 50 shown in FIG. 1 and 2. Processing circuitry 60, e.g. at least one processor, of the control unit 50 may execute computer-executable instructions, e.g. those stored in the control unit 50, to perform the process 300. During vehicle operation, the control system 50 may control the air compressor to supply compressed air to the fuel cell stack on a basis of predicted and/or current load on the fuel cell system. The process 300 may begin upon a suitable trigger, e.g. when a braking event is detected in the vehicle. For example, it may be detected that a driver of the vehicle has stepped on a brake pedal. As another example, it may be detected that a driver changes a shift lever to a braking position provided in a shift device in the vehicle. The process 300 may be executed continuously as the vehicle operates, by monitoring a status of the vehicle for braking events.

In some examples, the braking event may be an ongoing braking event or a predicted braking event. For example, the control unit 50, in some examples in combination with one or more other components e.g. processors configured to predict a braking event, may generate a prediction regarding an upcoming event, upon which the process 300 may be initiated. For example, it may be detected, based on a current location of the vehicle, that the vehicle is approaching a downhill portion of a road. As another example, based on historical data on operation of the vehicle and traveled routes, it may be known that at a certain location the vehicle typically slows down. As another example, it may be known that the vehicle is approaching a part of the route at which a speed limit is reduced, indicating that the vehicle is expected to slow down. As a further example, it may be detected that the vehicle is currently traveling at, or about to encounter, heavy traffic conditions where braking, such as frequent braking, may be required. The vehicle may also need to brake at road congestion; road construction sites and other obstacles; certain weather conditions such as e.g. road ice, heavy precipitation, flooding, high winds, etc.; and at other circumstances that may be predicted and/or detected, based on which an occurrence of the braking event may be predicted. Other suitable ways to detect an actual braking event or predict an upcoming braking event may be used.

At **block 302**, the process 300 comprises estimating a braking power of the braking event such as e.g. a regenerative braking event. The braking power may include a power, e.g. a minimum power, from the fuel cell system that may be running during the braking event. The braking power, or brake power trace, may be determined or estimated in dependence on any one or more out of terrain information, topography information, road conditions, vehicle characteristics, a weight of the vehicle, a payload of the vehicle, a gross combination weight (GCW) of the vehicle, a vehicle speed, traffic information, speed limits, actual and predicted weather conditions, and a status of the fuel cell system of the vehicle. For example, it may be required to brake harder on a steep hill or incline, or at certain e.g. emergency circumstances. The braking power may increase with the increase in the vehicle weight.

The braking power is determined to assess a need for dissipating excessive electrical energy due to a braking demand of the vehicle. The provision of determining an amount of possible excessive electrical energy from the braking event of the vehicle may be determined during a regenerative braking event. However, it may also be possible to predict possible excessive electrical energy from an upcoming braking event of the vehicle beforehand, based on one or more operational parameters.

In some examples, the braking power generated by the braking event of the vehicle is determined based on an operational parameter of the vehicle. By way of example, the operational parameter comprise any one or more of the following: data relating to an upcoming vehicle path, such as a downhill and uphill path; data relating to a change in vehicle speed, data relating to a change in acceleration, , data relating to a state of life of the fuel cells, characteristics of the electric machine, data relating to the weight of the vehicle, and data indicating a type of the vehicle.

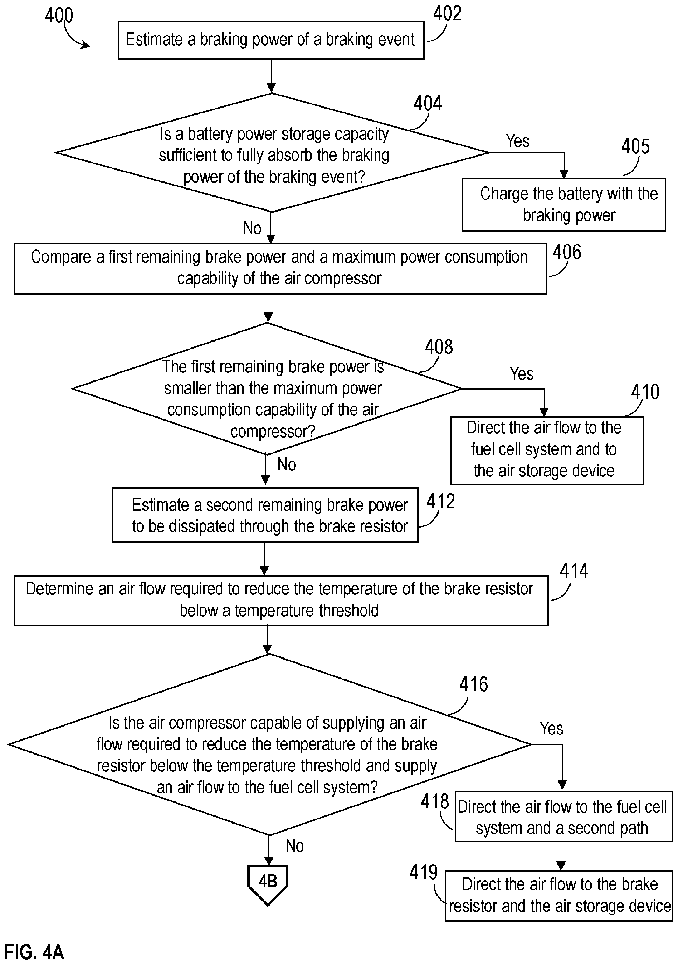

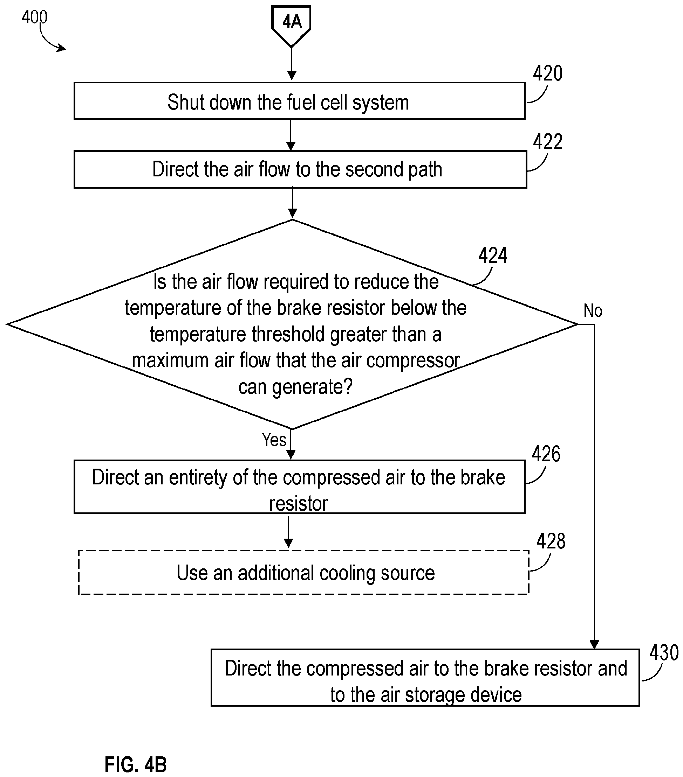

At **block 304**, the control unit 50, responsive to a determination that a battery power storage capacity of the battery of the vehicle is not sufficient to fully absorb the braking power of the braking event, operates the first flow control valve and the second flow control valve to selectively direct a compressed air flow from the air compressor to one or more of the fuel cell stack, the air storage device, and the brake resistor based on whether or not a power consumption capability of the air compressor is sufficient to absorb a first remaining braking power that is not absorbed by the battery, and/or based on whether or not the air compressor is capable of supplying an air flow required to reduce a temperature of the brake resistor below a temperature threshold when the first remaining braking power is greater than the power consumption capability of the air compressor. The braking power may include the minimum fuel cell system power, as discussed above. The processing at block 304 is described in more detail in connection with the method of FIGs. 4A and 4B, below.

The power consumption capability or capacity of the air compressor may have a certain limit. In some examples herein, the air compressor may be intentionally run at a high power i.e. a power that exceeds the needs of a fuel cell stack, such that the excess air generated by the air compressor is directed to bypass the fuel cell stack and to follow the second path towards the air storage device and/or the brake resistor.

The process 300 comprises controlling the first and second flow control valves 34, 44 in response to any one or more out of the braking power, operational state of fuel cell system the battery power storage capacity, a state of charge of the battery, and a state of health of the battery. The first and second flow control valves may be e.g. proportional pneumatic valves.

**FIGs. 4A** and **4B** illustrate an example of a method or process 400 of dissipating power during a braking event in a vehicle. The process 400 is a more detailed depiction of the process 300 of FIG. 3. The vehicle, such as e.g. vehicle 10 of FIG. 1, comprises a power assembly comprising an air compressor configured to supply a compressed air flow via a first path to a fuel cell system and via a second path to one or both an air storage device and a brake resistor. The method or process 400 may be a computer-implemented method performed by a control device or unit such as e.g. control unit 50 shown in FIG. 1 and 2. The processing circuitry 60 of the control unit 50 may execute computer-executable instructions to perform the process 400. In FIGs. 4A and 4B, optional acts are shown in dashed lines. Also, the order of the acts or steps, at respective blocks, may differ from the depicted order. In addition, two or more steps may be performed concurrently or with partial concurrence.

At **block 402**, the process 400 comprises estimating a braking power of the braking event. The braking power may be determined or estimated in dependence on any one or more out of terrain information, topography information, weather information, vehicle characteristics, a weight of the vehicle, a payload of the vehicle, a gross combination weight (GCW) of the vehicle, a vehicle speed, traffic information, speed limits, and a status of the fuel cell system of the vehicle. The vehicle may have more than one fuel cell system, and a status of each of the fuel cell systems may be considered.

At decision **block 404**, the process 400 comprises determining whether a battery power storage capacity is sufficient to fully absorb the braking power of the braking event. It should be noted that the battery, which can be one or more batteries, is described herein by way of example, as one or more supercapacitors can be used as an ESS for storing the excess braking power. The determination may be made in dependence on one or more out of the battery power storage capacity, a state of charge of the battery, and a state of health of the battery. The battery power storage capacity defines an amount of power that the battery may store and release, and it depends on a type and size of the battery, as well as on a battery's condition and prior use. The battery power storage capacity determines how much the battery can be charged, and this capacity changes with time i.e. with the use of the battery. The state of charge (SoC) of the battery is a level of charge of the battery, that is, how much the battery is currently charged. For example, a fully charged, to its capacity, battery, cannot accept any further power. A battery should not be overcharged which would damage the battery and create a safety risk. A maximum SoC is a value beyond which the battery cannot be charged, and the battery power storage capacity cannot exceed the maximum SoC. Furthermore, in some cases, the battery may be controlled to be allowed to be charged up to a certain value that is below the maximum SoC. For example, a SoC may be targeted to be up to 80% of the maximum SoC, although other target values may be used.

A state of health (SoH) of the battery defines a remaining lifetime and operation efficiency of the battery. The SoH can be defined as a percentage of the total, i.e. 100%, of the remaining lifetime of the ESS. For example, a SoH of 100% indicates that a battery has a 100% of its lifetime left. As another example, a SoH of 50% indicates that only 50% of the battery's lifetime remains at this point. The lifetime may also be defined as a number of charge/discharge cycles which the battery can undergo and still maintain its original power storage capacity.

A SoH of the battery may be defined in a suitable way, and it may depend on one or more out of battery's internal resistance, capacity, voltage, self-discharge, ability to accept a charge, number of charge-discharge cycles, age of the battery, temperature of the battery during its previous uses, and total energy charged and discharged. The SoH of the battery may be determined by electrochemical impedance spectroscopy method which is well-known. In some cases, the SoH of the battery may be determined using as ESS coulomb counting for estimating degradation. Any other technique may be used in addition or alternatively.

At **block 405**, responsive to a determination that the battery power storage capacity is sufficient to fully absorb the braking power of the braking event, the battery is charged with the braking power generated from the electric motor due to braking and from the fuel cell system if it is operational. It should be noted that more than one battery can be used in the vehicle. Also, although the battery is described herein as an example of the ESS, such as e.g. ESS 40, one or more supercapacitors can be used additionally or alternatively.

At **block 406**, responsive to a determination that the battery power storage capacity is not sufficient to fully absorb the braking power of the braking event, a first remaining braking power and a maximum power consumption capability of the air compressor are compared. The first remaining braking power is a power that is not absorbed by the battery that can absorb only a portion of the total braking power in this case, and the excess braking power thus needs to be dissipated in other ways. When the braking power cannot be completely absorbed by the batteries, an additional power dissipation source is used such as the air compressor and/or a brake resistor.

At decision **block 408**, it is determined whether the first remaining braking power is smaller than the maximum power consumption capability of the air compressor. The maximum power consumption capability of the air compressor is a maximum power that can be consumed by the air compressor. In other words, it is determined whether a portion of the braking power that cannot be absorbed by the ESS such as battery is smaller than the maximum power consumption capability of the air compressor, i.e. whether it can be absorbed by the air compressor operating at a maximum power.

It may be determined, at block 408, that the first remaining braking power is smaller than the maximum power consumption capability of the air compressor. In other words, the total braking power is smaller than a combination of the battery power storage capacity and the maximum power consumption capability of the air compressor. This indicates that the first remaining braking power can be fully absorbed by the air compressor. Alternatively, it may be determined, at block 408, that the first remaining braking power is not smaller, e.g. greater, than the maximum power consumption capability of the air compressor. In this situation, some excess braking power will need to be dissipated in other ways.

Responsive to the determination that the first remaining braking power is smaller than the maximum power consumption capability of the air compressor, the process 400 comprises, at **block 410**, operating the first flow control valve to direct a required compressed air flow to the fuel cell system and to the second path, and operating the second flow control valve to direct an additional compressed air flow to the air storage device without directing the compressed air to the brake resistor. Thus, at this point, the control unit 50 controls the first flow control valve 34 to operate in a first or intermediate position so as to direct the air flow to both the fuel cell system 30 and to the second path 39, and the control unit 50 also controls the second flow control valve 44 to operate in a second or first extreme position in which the second flow control valve 44 directs the compressed air flow only to the air storage device 54. The compressed air directed to the fuel cell system 30 is supplied to the cathode of the fuel cell stack 42, for electric power generation by the fuel cell system.

At this point the air compressor may not be required to operate at the maximum power, and the air compressor is operated at a required power that is required for the air compressor to absorb the first remaining braking power, wherein the required power can be smaller than the maximum power. The total braking power is absorbed in part by the battery and in part by the air compressor. Also, the compressed air flow, compressed by the air compressor, is provided to the fuel cell system, and an additional air flow is provided to the air storage device.

At **block 412**, responsive to a determination that the first remaining braking power is greater than the maximum power consumption capability of the air compressor, the process 400 comprises estimating a second remaining braking power that is a portion of the first remaining braking power to be dissipated through the brake resistor. Thus, if the braking power is greater than the storage capacity of the batteries and the maximum power absorption capacity of the air compressor, the control unit 50 determines an amount of braking power that needs to be dissipated through a further component such as a brake resistor as in some examples herein.

At **block 414**, the air flow required to reduce a temperature of the brake resistor below a temperature threshold, when the brake resistor dissipates the second remaining braking power, is determined or estimated. It is thus determined how much air is required to be delivered to the brake resistor to cool as the brake resistor dissipates the second remaining braking power. The brake resistor is utilizing compressed air from the air compressor for cooling purposes, i.e. the compressed air is supplied to cool the brake resistor during operation. The air flow required to cool the brake resistor below a certain limit, such as e.g. the temperature threshold, is estimated. The required air flow depends on the amount of braking power that the brake resistor would dissipate, referred to herein as the second remaining braking power. The air flow required for cooling may also depend on an ambient temperature, a temperature of the brake resistor, and other parameters.

At decision **block 416**, it is determined whether the air compressor is capable of supplying an air flow required to reduce the temperature of the brake resistor below the temperature threshold and supplying an air flow to the fuel cell system required to operate the fuel cell system at a minimum power. The brake resistor is to dissipate the second remaining braking power and it needs to be cooled by the compressed air delivered by the air compressor. Thus, the control unit 50 determines whether the air flow required for the brake resistor 56 cooling is greater than a maximum air flow that the air compressor 32 can generate minus an air flow required by the fuel cell system to operate at minimum power demands, i.e. at a minimum power. When the air flow required for the brake resistor cooling, when the brake resistor 56 dissipates the second remaining braking power, is greater than the maximum air flow that the air compressor 32 can generate minus the air flow required to operate the fuel cell system at the minimum power, this indicates that the air compressor is not capable of both cooling the brake resistor and supplying a compressed air flow sufficient to maintain the fuel cell system at a minimum power level. Alternatively, the air compressor, operating at a maximum power to generate the maximum air flow, is capable of both cooling the brake resistor and supplying a compressed air to the fuel cell system.

Shutting down the fuel cell stack removes the power that it is generating, wherein such power is not desirable in the circumstances in which there is already excess electrical energy that needs to be dissipated. This may be the case even with the air compressor consuming/dissipating a larger amount of power.

In some examples, the fuel cell system is of a type that can provide a very low minimum power when it is operational. Thus, in such cases, the minimum power at which the fuel cell system can be kept on and operational is zero or near-zero, and it may be determined that no air flow will need to be supplied to the fuel cell system even though it is not considered to be shut down. Such fuel cell system does not create any power, and the compressed ambient air can be directed to bypass the fuel cell system of desired. For example, the first flow control valve 34 can be operated to direct the compressed air only to the second path 39, such that the air bypasses the fuel cell stack.

Accordingly, **at block 418**, the control unit 50 operates the first flow control valve to direct the compressed air flow to the fuel cell system and to the second path, wherein the fuel cell system is supplied with the air flow required to operate the fuel cell system at the minimum power. In this way, because the fuel cell system is kept on and operational during a braking event and because a shutdown of the fuel cell system is avoided, the present method advantageously allows reducing a risk of damage to the fuel cell system thereby increasing a lifetime of fuel cell system.

Thus, the control unit 50 controls the first flow control valve 34 to operate in a first or intermediate position so as to direct the air flow to both the fuel cell system 30 and to the second path 39. At block 418, the control unit 50 controls the air compressor to operate at a maximum power. The air compressor is ramped up using the excessive electrical energy generated during the braking event. The excess air flow produced due to ramping of the air compressor is directed to the fuel cell system, and, via the second path, to the brake resistor and, any air not used to cool the brake resistor, to the air storage device for storage and potential further use.

At **block 419**, the control unit 50 operates the second flow control valve to direct the air flow to the brake resistor and to the air storage device, wherein the brake resistor is supplied with the air flow required to reduce the temperature of the brake resistor below the temperature threshold. The control unit 50 thus controls the second flow control valve 44 to operate in the first or intermediate position in which the second flow control valve 44 directs the compressed air flow to both the air storage device 54 and the brake resistor 56.

Thus, the valves 34, 44 are configured to be controlled in response to the determination that the air compressor is capable of meeting the cooling needs of the brake resistor and, if needed, of maintaining operation of the fuel cell system at a minimum power level.

The control device or unit 50 is advantageously configured to prioritize distributing the compressed air to the brake resistor such that the brake resistor is cooled during the braking event. As another advantage, because it is determined that the air compressor, while providing an adequate air flow for the brake resistor cooling, is also capable of maintaining the fuel cell system operational, a shutdown of the fuel cell system is avoided. This allows reducing a number of shutdowns that are typically damaging to fuel cell systems. In this way, a durability and reliability of the fuel cell system are improved and its lifetime may be extended.

Responsive to a determination that the air compressor is not capable of supplying the air flow required to reduce the temperature of the brake resistor below the temperature threshold and supplying the air flow to the fuel cell system required to operate the fuel cell system at the minimum power, the process 400 follows to block 420, which is shown in FIG. 4B, in which the example of FIG. 4A continues.

At **block 420** of FIG. 4B, the fuel cell system is shut down. In some cases, the fuel cell system may be shut down or deactivated in a suitable manner so as to not produce any power.

As noted above, in some implementations, the fuel cell system may be of a type that can provide very low minimum power when it is operational. The fuel cell system may be kept on and operational at zero or near-zero power, and no fuel cell system shutdown may need to be performed. In such examples, the fuel cell system may be deactivated.

At **block 422**, the control unit 50 operates the first flow control valve 34 to direct the compressed air flow only to the second path 39. Thus, the first flow control valve 34 is controlled to be operated in the second position.

At decision **block 424**, the process 400 comprises determining whether the air flow required to reduce the temperature of the brake resistor below the temperature threshold is greater than a maximum air flow that the air compressor can generate.

At **block 426**, responsive to a determination that the air flow required to reduce the temperature of the brake resistor below the temperature threshold is greater than the maximum air flow that the air compressor can generate, the control unit 50 operates the second flow control valve 44 to direct an entirety of the compressed air to the brake resistor. The control unit 50 thus controls the second flow control valve 44 to operate in a third or second extreme position in which the second flow control valve 44 directs the compressed air flow in the second path 39 only to the brake resistor 56. No air is provided for storage in the air storage device.

At **block 428**, an additional cooling source may be used to reduce the temperature of the brake resistor below the temperature threshold. The control unit 50 may control a suitable component and/or subsystem of the fuel cell system or the power assembly to assist in cooling the brake resistor to a temperature below the temperature threshold. The additional cooling source may be used in cases in which the compressed air flow, comprising a maximum air flow that the air compressor can generate, is not sufficient to cool the brake resistor e.g. below the temperature threshold. The additional cooling source may comprise one or both a system delivering a cooling medium to the brake resistor and mechanical brakes. A cooling subsystem of the fuel cell system may deliver a cooling medium for cooling the brake resistor. A brake system of the vehicle may be e.g. an electro-mechanical brake (EMB) system for controlling braking forces of the wheels of the vehicle. In some examples, the vehicle may have electro-hydraulic brakes.

At **block 430**, responsive to a determination that the air flow required to reduce the temperature of the brake resistor below the temperature threshold is not greater than the maximum air flow that the air compressor can generate, the process 400 comprises, with the first flow control valve being operated to direct the compressed air flow only to the second path, operating the second flow control valve to direct the compressed air to the brake resistor and to the air storage device, wherein the brake resistor is supplied with the air flow required to reduce the temperature of the brake resistor below the temperature threshold.

In this way, the system and method or process 400 herein advantageously allow efficient dissipation of the excess electric energy created due to regenerative braking. The system provides for increasing the braking capability of a fuel cell electric vehicle as well as improving the durability/lifetime of the fuel cell systems in a fuel cell electric vehicle. The energy is recuperated more effectively, without a need for an oversized battery/energy storage system in the vehicle, e.g. due to the use of the air storage device and other features of the system. Furthermore, unnecessary fuel cell system shutdowns are reduced or eliminated, thereby increasing a lifetime of one or more the fuel cell systems of the vehicle.

Methods of handling e.g. dissipating a braking power of a braking event of a vehicle as described herein, in accordance with aspects of the present disclosure, may be performed by a control device or unit such as, e.g., control unit 50 illustrated in FIGs. 1 and 2.

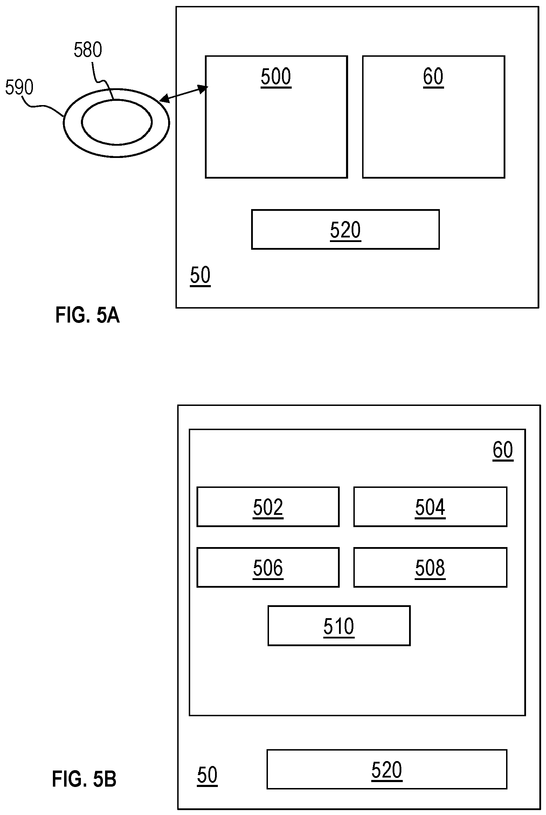

FIGs. 5A and 5B additionally illustrate an example of an arrangement of the control unit 50 for controlling the power assembly 20 of the vehicle 10, the power assembly 20 comprising the fuel cell system 30, the air compressor 32, the first flow control valve 34, and the second flow control valve 44. The control unit 50 is adapted and configured to perform the method of any of the examples described herein.

As shown in **FIG. 5A**, the control unit 50 may comprise processing circuitry 60 (also shown in FIG. 2), memory 500, and input and output interface 520 configured to communicate with any necessary components and/or entities of examples herein. The input and output interface 520 may comprise a wireless and/or wired receiver and a wireless and/or wired transmitter. The input and output interface 520 may comprise a wireless and/or wired transceiver. The control unit 50 may be configured to be in communication, using the input and output interface 520, with the air compressor 32, with the first and second flow controllable valves 34, 44, and with various other components of the power assembly 20 and the vehicle 10. The control unit 50 may also be configured to use the input and output interface 520 to communicate with various remove services or servers via a wireless communications network. For example, the control unit 50 may communicate with one or more of navigation and/or map services, weather services, and other services or servers, to receive information relevant to the vehicle 10, a route traveled by the vehicle 10, and environment around the vehicle 10.

The methods described herein may be implemented using processing circuitry, e.g., one or more processors, such as the processing circuitry 60 of the control unit 50, together with computer program code or computer-executable instructions stored in a tangible computer-readable storage medium for performing the functions and actions of the examples herein.

The memory 500 of the control unit 50 may comprise one or more memory units. The memory 500 comprises computer-executable instructions executable by the processing circuitry 60. The memory 500 is configured to store, e.g., information, data, etc., and the computer-executable instructions to perform the methods in accordance with examples herein when executed by the processing circuitry 60. The control unit 50 may additionally obtain information from an external memory. Furthermore, the control unit 50 may communicate with various external data providers, e.g., weather services or servers, Global Positioning System (GPS) servers, Global Navigation Satellite System (GNSS) servers, map servers, and/or any other servers and/or services from which information useful for methods herein may be obtained.

The methods according to aspects of the present disclosure may be implemented by e.g. a computer program product 580 or a computer program, comprising computer-executable instructions, i.e., software code portions, which, when executed by processing circuitry, e.g., the processing circuitry 60, cause the processing circuitry to perform the actions described herein, as performed by the control unit 50.

In some examples, the computer program product 590 is stored on a tangible or physical computer-readable storage device or medium 590. The computer-readable storage medium 590 may be, e.g., a disc, a universal serial bus (USB) stick, or any other type of computer-readable storage media. The computer-readable storage device or medium 590 comprise any physical devices that provide the ability to store information such as data and/or instructions to be accessed by a processor such as the processing circuitry 60. The computer-readable storage medium 590, having stored thereon the computer program product, may comprise the instructions which, when executed by processing circuitry, e.g., the processing circuitry 60, cause the processing circuitry to perform the actions of the method described herein, as performed by the control unit 50.

As shown in **FIG. 5B**, the control unit 50 may comprise **an estimating unit 502**. The control unit 50, the processing circuitry 60, and/or the estimating unit 502 are configured to estimate a braking power of the braking event. The control unit 50, the processing circuitry 60, and/or the estimating unit 502 may be configured to estimate a first remaining braking power that is not absorbed by the battery. In some examples, the control unit 50, the processing circuitry 60, and/or the estimating unit 502 may be configured to estimate a second remaining braking power that is a portion of the first remaining braking power to be dissipated through the brake resistor.

The control unit 50 may comprise **an operating unit 504**. The control unit 50, the processing circuitry 60, and/or the operating unit are configured to, responsive to a determination that a battery power storage capacity of a battery of the vehicle is not sufficient to fully absorb the braking power of the braking event, operate the first flow control valve and the second flow control valve to selectively direct a compressed air flow from the air compressor to one or more of the fuel cell stack, the air storage device, and the brake resistor based on whether or not a maximum power consumption capability of the air compressor is sufficient to absorb a first remaining braking power that is not absorbed by the battery, and/or based on whether or not the air compressor is capable of supplying an air flow required to reduce a temperature of the brake resistor below a temperature threshold when the first remaining braking power is greater than the maximum power consumption capability of the air compressor.

The control unit 50, the processing circuitry 60, and/or the operating unit 504 may be configured to, responsive to a determination that the first remaining braking power is smaller than the maximum power consumption capability of the air compressor, operate the first flow control valve to direct a required compressed air flow to the fuel cell system and to the second path, and operating the second flow control valve to direct an additional compressed air flow to the air storage device without directing the compressed air to the brake resistor

The control unit 50, the processing circuitry 60, and/or the operating unit 504 may further be configured to, responsive to a determination that the air compressor is capable of supplying the air flow required to reduce the temperature of the brake resistor below the temperature threshold and supplying the air flow to the fuel cell system required to operate the fuel cell system at the minimum power:
operate the first flow control valve to direct the compressed air flow to the fuel cell system and to the second path, wherein the fuel cell system is supplied with the air flow required to operate the fuel cell system at the minimum power, and
operate the second flow control valve to direct the air flow to the brake resistor and to the air storage device, wherein the brake resistor is supplied with the air flow required to reduce the temperature of the brake resistor below the temperature threshold.

The control unit 50, the processing circuitry 60, and/or the operating unit 504 may further be configured to operate the first flow control valve to direct the compressed air flow only to the second path.

The control unit 50, the processing circuitry 60, and/or the operating unit 504 may further be configured to, responsive to a determination that the air flow required to reduce the temperature of the brake resistor below the temperature threshold is greater than the maximum air flow that the air compressor can generate, operate the second flow control valve to direct an entirety of the compressed air to the brake resistor.

The control unit 50, the processing circuitry 60, and/or the operating unit 504 may further be configured to, responsive to a determination that the air flow required to reduce the temperature of the brake resistor below the temperature threshold is smaller than the maximum air flow that the air compressor can generate,
with the first flow control valve being operated to direct the compressed air flow only to the second path, operate the second flow control valve to direct the compressed air to the brake resistor and to the air storage device, wherein the brake resistor is supplied with the air flow required to reduce the temperature of the brake resistor below the temperature threshold.

The control unit 50 may comprise a comparing unit 506. The control unit 50, the processing circuitry 60, and/or the comparing unit 506 may be configured to compare the first remaining braking power and the maximum power consumption capability of the air compressor.

The control unit 50 may comprise a determining unit 508. The control unit 50, the processing circuitry 60, and/or the determining unit 508 may be configured to determine an air flow required to reduce the temperature of the brake resistor below the temperature threshold when the brake resistor dissipates the second remaining braking power.

The control unit 50, the processing circuitry 60, and/or the determining unit 508 may be configured to determine whether the air compressor is capable of supplying the air flow required to reduce the temperature of the brake resistor below the temperature threshold and supplying an air flow to the fuel cell system required to operate the fuel cell system at the minimum power.

The control unit 50, the processing circuitry 60, and/or the determining unit 508 may be configured to determine whether the air flow required to reduce the temperature of the brake resistor below the temperature threshold is greater than a maximum air flow that the air compressor can generate.

The control unit 50 may comprise a using unit 510. The control unit 50, the processing circuitry 60, and/or the using unit 510 may be configured to use an additional cooling source to reduce the temperature of the brake resistor below the temperature threshold.

The control unit 50 may include various units for performing the processing at blocks of FIG. 3 and FIGs. 4A and 4B. Those skilled in the art will appreciate that the control unit 50 and the (sub)units of the control unit 50 shown in FIG. 5B, as well as any other units that may be present in the control unit 50, may refer to a combination of analogue and digital circuits, and/or one or more processors that may be configured with software and/or firmware that, when executed by the respective one or more processors, may carry out the actions or steps of the method(s) in accordance with the present disclosure. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A method of dissipating power during a braking event in a vehicle (10), the vehicle (10) comprising a power assembly (20) comprising a fuel cell system (30), an air compressor (32), a first flow control valve (34) positioned downstream of the air compressor (32) and configured to selectively direct a compressed air flow, via a first path, from the air compressor to one or both the fuel cell system (30) and a second path that is separate from the first path, and a second flow control valve (44) positioned in the second path and configured to selectively direct the air flow to one or both brake resistor (56) and an air storage device (54), the method comprising:
estimating (302, 402) a braking power of the braking event; and
responsive to a determination that a battery power storage capacity of a battery of the vehicle is not sufficient to fully absorb the braking power of the braking event, operating (304) the first flow control valve and the second flow control valve to selectively direct a compressed air flow from the air compressor to one or more of the fuel cell stack, the air storage device, and the brake resistor based on whether or not a maximum power consumption capability of the air compressor is sufficient to absorb a first remaining braking power that is not absorbed by the battery, and/or based on whether or not the air compressor is capable of supplying an air flow required to reduce a temperature of the brake resistor below a temperature threshold when the first remaining braking power is greater than the maximum power consumption capability of the air compressor.

2. The method of claim 1, comprising:
comparing (406) the first remaining braking power and the maximum power consumption capability of the air compressor.

3. The method of claim 2, comprising:
responsive to a determination that the first remaining braking power is smaller than the maximum power consumption capability of the air compressor, (410) operating the first flow control valve to direct a required compressed air flow to the fuel cell system and to the second path, and operating the second flow control valve to direct an additional compressed air flow to the air storage device without directing the compressed air to the brake resistor.

4. The method of claim 2, comprising:
responsive to a determination that the first remaining braking power is greater than the maximum power consumption capability of the air compressor,
estimating (412) a second remaining braking power that is a portion of the first remaining braking power to be dissipated through the brake resistor; and
determining (414) an air flow required to reduce the temperature of the brake resistor below the temperature threshold when the brake resistor dissipates the second remaining braking power.

5. The method of claim 4, comprising:
determining (416) whether the air compressor is capable of supplying the air flow required to reduce the temperature of the brake resistor below the temperature threshold and supplying an air flow to the fuel cell system required to operate the fuel cell system at the minimum power.

6. The method of claim 5, comprising:
responsive to a determination that the air compressor is capable of supplying the air flow required to reduce the temperature of the brake resistor below the temperature threshold and supplying the air flow to the fuel cell system required to operate the fuel cell system at the minimum power,
operating (418) the first flow control valve to direct the compressed air flow to the fuel cell system and to the second path, wherein the fuel cell system is supplied with the air flow required to operate the fuel cell system at the minimum power, and
operating (419) the second flow control valve to direct the air flow to the brake resistor and to the air storage device, wherein the brake resistor is supplied with the air flow required to reduce the temperature of the brake resistor below the temperature threshold.

7. The method of claim 5, comprising:
responsive to a determination that the air compressor is not capable of supplying the air flow required to reduce the temperature of the brake resistor below the temperature threshold and supplying the air flow to the fuel cell system required to operate the fuel cell system at the minimum power,
shutting down (420) the fuel cell system, and
operating (422) the first flow control valve to direct the compressed air flow only to the second path.

8. The method of claim 7, further comprising:
determining (424) whether the air flow required to reduce the temperature of the brake resistor below the temperature threshold is greater than a maximum air flow that the air compressor can generate.

9. The method of claim 8, further comprising:
responsive to a determination that the air flow required to reduce the temperature of the brake resistor below the temperature threshold is greater than the maximum air flow that the air compressor can generate,
operating (426) the second flow control valve to direct an entirety of the compressed air to the brake resistor.

10. The method of claim 9, further comprising:
using (428) an additional cooling source to reduce the temperature of the brake resistor below the temperature threshold.

11. The method of claim 10, wherein the additional cooling source comprises one or both a system delivering a cooling medium to the brake resistor and mechanical brakes.

12. The method of claim 8, further comprising:
responsive to a determination that the air flow required to reduce the temperature of the brake resistor below the temperature threshold is smaller than the maximum air flow that the air compressor can generate,
with the first flow control valve being operated to direct the compressed air flow only to the second path, operating (430) the second flow control valve to direct the compressed air to the brake resistor and to the air storage device, wherein the brake resistor is supplied with the air flow required to reduce the temperature of the brake resistor below the temperature threshold.

13. A control unit (50) for controlling a power assembly (20) of a vehicle (10) comprising a fuel cell system (30), an air compressor (32), an air storage device (54), a brake resistor (56), a first flow control valve (34), and second flow control valve (44), the control unit (50) being configured to perform the method of any one of claims 1 to 12.

14. A power assembly (20) for a vehicle (10), the power assembly (20) comprising a fuel cell system (30), an air compressor (32), an air storage device (54), and a brake resistor (56), the power assembly (20) further comprising:
a first flow control valve (34) positioned downstream of the air compressor (32) and configured to selectively direct a compressed air flow, via a first path, from the air compressor to one or both the fuel cell system (30) and a second path that is separate from the first path;
a second flow control valve (44) positioned in the second path and configured to selectively direct the air flow to one or both the brake resistor (56) and the air storage device (54); and
a control unit (50) configured to control operation of the first and second flow control valves, wherein the control unit controls the first and second flow control valves to dissipate braking power generated during a braking event in the vehicle, the control unit (50) being configured to perform the method of any one of claims 1 to 12.

15. A vehicle (10) comprising a power assembly (20), the power assembly (20) comprising a fuel cell system (30), an air compressor (32), an air storage device (54), and a brake resistor (56), the vehicle (10) further comprising:
a first flow control valve (34) positioned downstream of the air compressor (32) and configured to selectively direct a compressed air flow, via a first path, from the air compressor to one or both the fuel cell system (30) and a second path that is separate from the first path;
a second flow control valve (44) positioned in the second path and configured to selectively direct the air flow to one or both brake resistor (56) and an air storage device (54); and
a control unit (50) configured to control operation of the first and second flow control valves (34, 44), wherein the control unit controls the first and second flow control valves to dissipate power during a braking event in the vehicle, the control unit (50) being configured to perform the method of any one of claims 1 to 12.
